Europäisches Patentamt

European Patent Office

Office européen des brevets

(11) Publication number: 0 274 990
A1

## EUROPEAN PATENT APPLICATION

(21) Application number: 87830014.4

(22) Date of filing: 16.01.87

(51) Int. Cl.4: B28D 1/22 , C03B 33/12

(43) Date of publication of application:
20.07.88 Bulletin 88/29

(84) Designated Contracting States:
BE DE ES FR GB GR NL

(71) Applicant: HOBBY TECNICA S.A.S. DI
ROBERTI L. & C.
Via Picciola, 60
I-61100 Pesaro(IT)

(72) Inventor: Roberti, Lamberto
Via Bonini, 140
I-61100 Pesaro(IT)
Inventor: Ottaviani, Liliana
Via S. Decenzio, 11
I-61100 Pesaro(IT)

(74) Representative: Lanzoni, Luciano
c/o BUGNION S.p.A. Via Farini, 37
I-40124 Bologna(IT)

(54) Pocket device to cut ceramic tiles.

(57) The present invention relates to devices designed to cut ceramic tiles by means of a hard-metal wheel adapted to cut the tiles by pressure. In order to separate the parts composing the tile a clamp system is provided which consists of a movable wedge-shaped element (2)and a fixed concave-bulged flat (9) against which the tile (14) is urged by the movable wedge-shaped element (2) acting upon the region of the cutting produced by a hard-metal wheel (4).

FIG1

## POCKET DEVICE TO CUT CERAMIC TILES

The present invention relates to a pocket device to cut ceramic tiles, also adapted to cut glass sheets.

It is already known a device provided with a shaped handgrip having a jacket buried thereinto, inside which jacket a wedge-shaped element is allowed to slide, said wedge-shaped element being provided with a screw-threaded hole into which a worm screw integral to a handle carrying a hard-metal wheel is introduced.A shank having a square or rectangular section is integral to the handgrip and it supports a flat provided with a concave bulging jutting out over the wedge-shaped element.

The operation of the above described device, of known type, comprises the steps of carrying out the incision of the tile by manually pressing the hard-metal wheel upon the tile itself according to a preselected cut line and of introducing the tile between the wedge-shaped element and the concave-bulged flat until the tile lays on the shank connecting the two parts so that the wedge may act upon the tile in the region of the incision obtained by the hard-metal wheel.

The above described device has some drawbacks the most important of which is the fact that when cuts oblique to the tile sides are carried out, during the separation step of the parts, the concave-bulged flat does not lay with at least two sides thereof on the tile itself so that the pressure exerted by the wedge-shaped element is not evenly distributed over the two parts divided by the incision, which may cause an irregular and undesired breakage of the tile.

A further drawback which can bring about a breakage according to an undesired line in the tile is due to the fact that, being the shank of square or rectangular section, it exhibits a face acting as a support surface for one side of the tile only in the case of cuts parallel to the tile sides.

In the case of oblique cuts, for example at 45° or according to one of the tile diagonals, the shank face will no longer act as a support surface for the tile side, but only the corner of said shank will come into contact with said tile side and therefore the separating operation will be difficult.

A still further drawback is due to the fact that the wheel made of hard metal is not readily interchangeable and the replacement thereof involves an important loss of time; since this replacement has to be done rather often, it causes trouble to the operator using the device.

The object of the present invention is to obviate the above mentioned drawbacks and in particular to allow the tile to be cut without difficulty according to oblique lines, without any risk either of uneven breakage or of breakage along undesired lines.

A futher object is to enable a quick and easy replacement of the wheel.

The foregoing and still further objects are achieved by the pocket device to cut ceramic tiles being the subject of the present invention,of the type comprising a handgrip having a jacket buried thereinto, inside which jacket a wedge-shaped element protruding from the handgrip can slide, said wedge-shaped element being operated by a screw integral to a handle carrying a hard-metal wheel; and a flat provided with a concave bulging integral via a connecting shank to the handgrip and jutting out over said wedge-shaped element, characterized in that the shank connecting the concave-bulged flat to the handgrip has, in section, a substantially W-shaped outline in order to offer support surfaces to the sides of a tile so that the latter can be separated according to lines that are inclined to the tile sides, the concave-bulged flat extend ing more than the wedge-shaped element.

A further feature of the present invention consists in that it comprises a removable plate provided with a hole into which a pivot pin designed to rotate the hard-metal wheel is introduced.

The foregoing and further features will become more apparent from the description of a preferred embodiment given hereinafter by way of non-limiting example with reference to the accompanying drawings, in which:

- Fig. 1 is a front view of the device, some parts being in section so that others may be rendered more prominent;

- Fig. 2 is a side view of the device;

- Fig. 3 is a plan view of the device taken in section along the line 3-3 in Fig. 1 with a tile introduced thereinto so that it may be cut along one of its diagonals;

- Fig. 4 is a plan view of the device with a tile introduced thereinto so that it may be cut according to a straight line oblique to the tile sides.

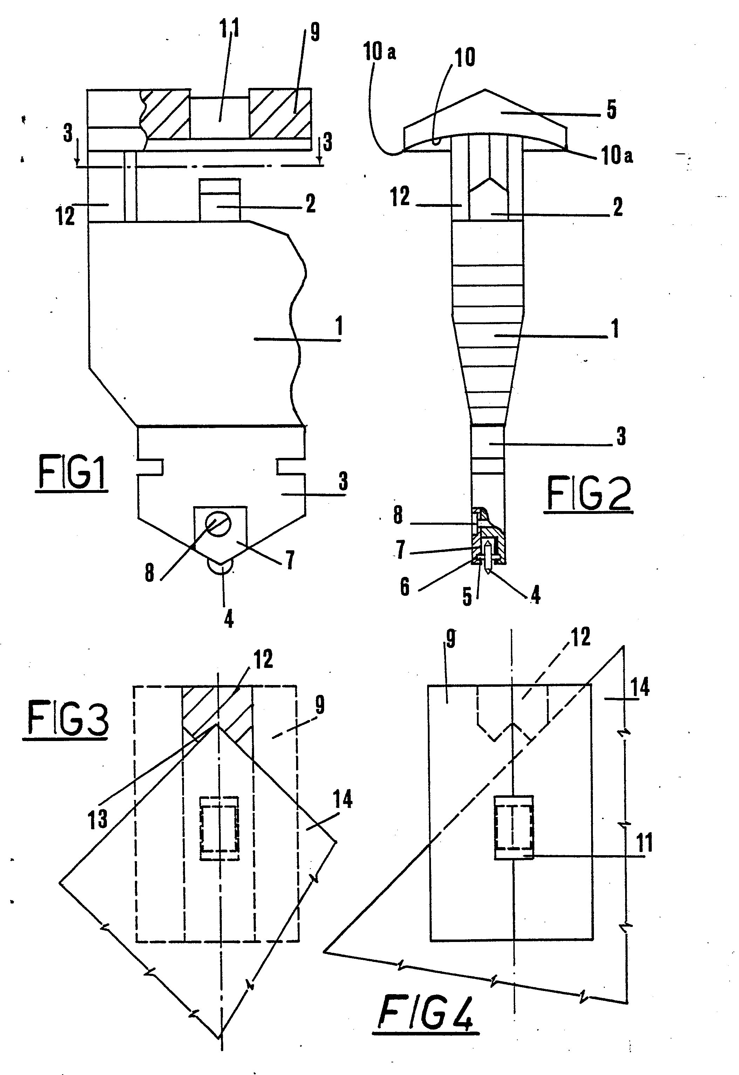

Referring to Figs. 1 and 2, reference numeral 1 denotes a handgrip inside which a wedge-shaped element 2 can slide, upon the manual command of a handle 3 through known connecting means not shown.

A wheel 4 made of hard metal is inserted in the lower part of handgrip 3; the wheel is provided with a pivot pin 5 entering a hole 6 in a plate 7 detachably fixed through a screw 8 to the handle 3.

At its upper part the device is provided with a flat 9 the lower face 10 of which exhibits a concave bulging. The flat 9 extends over the handgrip more than the wedge-shaped element 2 and is spaced apart from the handgrip itself by a distance greater than the thickness of currently commercialized tiles. The flat 9 is provided with a through hole 11 positioned over the wedge-shaped element 2 and is connected to the handgrip 1 through a shank 12. The through hole 11 has a rectangular section and is substantially identical with the wedge-shaped element section, perfectly matching with the position of said wedge-shaped element.

Shank 12 seen in section and as shown in Fig. 3 has a substantially W-shaped outline in order to offer surfaces 13 disposed substantially at 90° with respect to each other so that it may be possible either to insert the corner of a tile thereinto, as shown in Fig. 3, or to make a tile side bear against one of said surfaces 13, as shown in Fig. 4.

As shown in the figures, flat 9 has such a size that it juts out over the wedge-shaped element and projects over the handle so that it makes it certain that both corners 10a urge against the tile during the piece separation step. The hard-metal wheel can be easily replaced by loosening screw 8 and removing plate 7.

Many modifications and variations may be made to the invention as conceived, all falling within the scope of the claims.

## Claims

1. A pocket device to cut ceramic tiles of the type comprising a handgrip (1) having a jacket buried thereinto, inside which jacket a wedge-shaped element (2) protruding from the handgrip can slide, said wedge-shaped element being operated by a screw (8) integral to a handle (3) carrying a hard-metal wheel (4); and a flat (9) provided with a concave bulging integral via a connecting shank (12) to the handgrip and jutting out over said wedge-shaped element (2), characterized in that the shank (12) connecting the concave-bulged flat to the handgrip has, in section, a substantially W-shaped outline in order to offer support surfaces (13) to the sides of a tile (14) so that the same can be separated according to lines that are inclined to the tile sides; the concave-bulged flat (9) extending more than the wedge-shaped element (2).

2. The pocket device as claimed in claim 1, characterized in that the concave-bulged flat (9) is provided with a through hole (11) disposed over the wedge-shaped element (2) in register therewith.

3. The pocket device as claimed in claim 1, characterized in that the shank (12) is spaced apart from the wedge-shaped element (2).

4. The pocket device as claimed in claim 1, characterized in that the shank (12) has a substantially W-shaped section with surfaces at 90° with respect to each other.

5. The pocket device as claimed in claim 1, characterized in that it comprises a detachable plate (7) provided with a hole (6) into which a pivot pin (5) designed to rotate the hard-metal wheel (4) is introduced.

FIG1

FIG2

FIG3

FIG4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-2 516 668 (R.C. BARRET) | 1-5 | B 28 D 1/22 <br> C 03 B 33/12 |
| A | US-A-2 733 703 (J.V. FITZGERALD) | 1-5 | |
| A | US-A-2 529 735 (H. MARTIN) | 1-5 | |
| A | DE-C- 592 615 (J. WETZL) | 1-5 | |

TECHNICAL FIELDS
SEARCHED (Int. Cl.4)

B 28 D
C 03 B

The present search report has been drawn up for all claims

| Place of search | Date of completion of the search | Examiner |
|---|---|---|
| THE HAGUE | 10-09-1987 | MOET H.J.K. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03 82